# EUROPEAN PATENT APPLICATION

(11) **EP 0 701 916 A2**
(43) Date of publication of application: **20.03.1996**
(21) Application number: 95114324.7
(22) Date of filing: 12.09.1995
(51) Int. Cl.: B60H 1/32, B61D 27/00

(54) **Air conditioning systems**

(30) Priority: 16.09.1994 GB 9418668
(71) Applicant: NORMALAIR-GARRETT (HOLDINGS) LIMITED, Yeovil Somerset, BA20 2YB (GB)
(72) Inventor: Richards, Donald James, Yeovil, Somerset, BA20 2LJ (GB); Giles, George Richard, South Petherton, Somerset, TA13 5ER (GB); Roots, Christopher Francis, Yeovil, Somerset, BA22 8SU (GB); Smith, Richard Martin, Sherborne, Dorset, DT9 6DE (GB)
(74) Representative: Lucking, David John

(57) **Abstract**

An air cycle air conditioning system (10) which in one mode of operation delivers a flow of low temperature air for cooling an enclosure (11) and in another mode of operation delivers a flow of high temperature air for heating the enclosure (11), comprising primary heat exchange means (17) having first air flow passages disposed in heat exchange relationship with second air flow passages (36, 40), air compressor means (12, 14) connected for supplying air to the first airflow passages, air expansion turbine means (16) connected for receiving air from the first airflow passages, inlet duct means (38, 42) connected for supplying air to the second airflow passages (36, 40), outlet duct means (45) connected for receiving air from the second airflow passages (36, 40), characterised in that first airflow directional control valve means (19) are connected with an outlet (33) from the turbine means (16) and second airflow directional control valve means (20) are connected with the outlet duct means (45), the first valve means (19) being movable between a position in which the turbine outlet (16) is communicated with the enclosure (11) in the cooling mode and a position in which the turbine outlet (16) is communicated with ambient atmosphere in the heating mode, and the second valve means (20) being movable between a position in which the outlet duct means (45) is communicated with ambient atmosphere in the cooling mode and a position in which the outlet duct means (45) is communicated with the enclosure (11) in the heating mode.

## Description

### Description of Invention

This invention relates to air conditioning systems and is more particularly concerned with an air cycle air conditioning system which in one phase of operation delivers a flow of low temperature air for cooling an enclosure and in another phase of operation delivers a flow of high temperature air for heating the enclosure.

In this specification reference to low temperature air is to air at a temperature below that of ambient atmospheric air temperature and reference to high temperature air is to air at a temperature above that of ambient atmospheric air temperature.

It has been common practice to use a vapour cycle system to deliver a flow of low temperature air to reduce a heat load in an enclosure such as a compartment or carriage of a ground based transportation vehicle. However, vapour cycle systems are now considered to be disadvantageous because they require the use of refrigerants which are damaging to the environment in the event of leakage.

Attention has now turned to the provision of air cycle air conditioning systems which use the thermodynamic properties of air to supply low temperature air for cooling in one mode of operation and high temperature air for heating in another mode of operation. Air cycle air conditioning systems for conditioning ground based transportation vehicles have been proposed which are both complex and expensive in that they employ two or more heat exchangers to cool and/or heat the air delivered to the enclosure and embody numerous air flow directional control valves for controlling the flow of air in changing the system from a cooling mode to a heating mode. See, for example, EP-A-0582282.

An object of the present invention is to reduce the complexity and cost of an air cycle air conditioning system which in one mode of operation delivers a flow of low temperature air for cooling and in another mode of operation delivers a flow of high temperature air for heating.

Accordingly, in its broadest aspect the present invention provides an air cycle air conditioning system which in one mode of operation delivers a flow of low temperature air for cooling an enclosure and in another mode of operation delivers a flow of high temperature air for heating the enclosure, comprising primary heat exchange means having first air flow passages disposed in heat exchange relationship with second air flow passages, air compressor means connected for supplying air to the first airflow passages, air expansion turbine means connected for receiving air from the first airflow passages, inlet duct means connected for supplying air to the second airflow passages, outlet duct means connected for receiving air from the second airflow passages, characterised in that first airflow directional control valve means are connected with an outlet from the turbine means and second airflow directional control valve means are connected with the outlet duct means, the first valve means being movable between a position in which the turbine outlet is communicated with the enclosure in the cooling mode and a position in which the turbine outlet is communicated with ambient atmosphere in the heating mode, and the second valve means being movable between a position in which the outlet duct means is communicated with ambient atmosphere in the cooling mode and a position in which the outlet duct means is communicated with the enclosure in the heating mode.

The present invention reduces the complexity of an air cycle air conditioning system by using the primary heat exchange means to supply the airflow for both cooling and heating of the enclosure.

In a preferred embodiment of the invention the system includes an enclosure air recirculation loop incorporating a third airflow directional control valve movable between a position in which a portion of enclosure air is mixed with expanded turbine air and delivered back to the enclosure in the cooling mode, and a position in which the portion of enclosure air is supplied to an inlet of the motor driven compressor wheel in the heating mode.

Duct means connecting between the third airflow control valve and the inlet to the motor driven compressor wheel, preferably, incorporates a volume airflow control valve whereby in the cooling mode a controlled flow of ambient air may be introduced into the enclosure air recirculation loop to maintain a constant volume flow of cooling air to the enclosure.

Whilst the inlet duct means supplying air to the second airflow passages may comprise an ambient air inlet duct, preferably, it further comprises an enclosure air recirculation duct whereby a portion of enclosure air may be recirculated to the second airflow passages.

In an embodiment of the invention having both ambient air and recirculated enclosure air supplied to the second airflow passages, airflow passages for ambient air are preferably separated from airflow passages for recirculated enclosure air and the ambient air and recirculated enclosure airflows are mixed downstream of the second airflow passages. Whilst the primary heat exchange means may comprise two discrete heat exchangers with aligned first airflow passages, it preferably comprises a unitary heat exchanger.

A first motor driven fan provided in an enclosure air supply duct and a second motor driven fan provided in an ambient vent duct forming part of the duct means from the second airflow passages, may be switched on, as appropriate, to provide a flow of ventilating air through the enclosure when the air compressor means is non-operational and the directional airflow control valves are switched to either the heating mode or the cooling mode.

The compressor means comprises a compressor wheel driven by an electric motor which may be a switched reluctance motor.

In an embodiment of the invention the motor driven compressor wheel is connected for delivering air to a second compressor wheel mounted for rotation on a common shaft with the air expansion turbine means which preferably comprises a turbine wheel.

Whilst the electric motor is preferably a variable speed motor connected for receiving control signals from an electronic control unit (ECU) to vary the rotational speed of the compressor wheel and, hence, the pressure drop across the turbine wheel, the electric motor may be a constant speed motor which is switched on and off by the ECU.

A system in accordance with the invention preferably includes a reheater-condenser heat exchanger connected on one side for receiving air flowing from the first airflow passages of the primary heat exchange means and for delivering this air to the air expansion turbine means, and connected on its other side for receiving at least a portion of the air flowing to the enclosure from the air expansion turbine means.

The air expansion turbine means, preferably delivers air to a mixing box for mixing, in the cooling mode, with recirculated enclosure air.

The mixing box delivers air to enclosure air supply duct means which incorporates the first airflow control valve means and which is joined downstream of the first airflow control valve means with a high temperature air supply duct connecting at its opposite end with the second air flow directional control valve means.

The invention will now be further described by way of example and with reference to the accompanying drawings in which:
Figure 1 is a diagrammatic illustration of an air cycle cooling system in accordance with one embodiment of the invention when operating in a cooling mode;
Figure 2 is a diagrammatic illustration of the system shown in Figure 1 when operating in a heating mode; and
Figure 3 is a diagrammatic illustration of a ground based transportation vehicle embodying the invention.

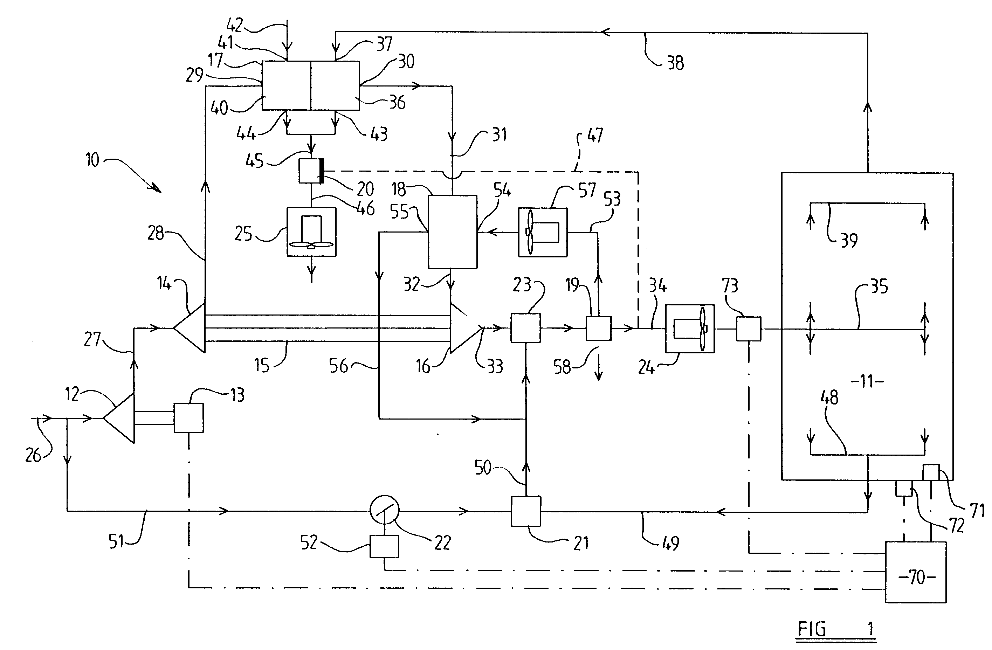

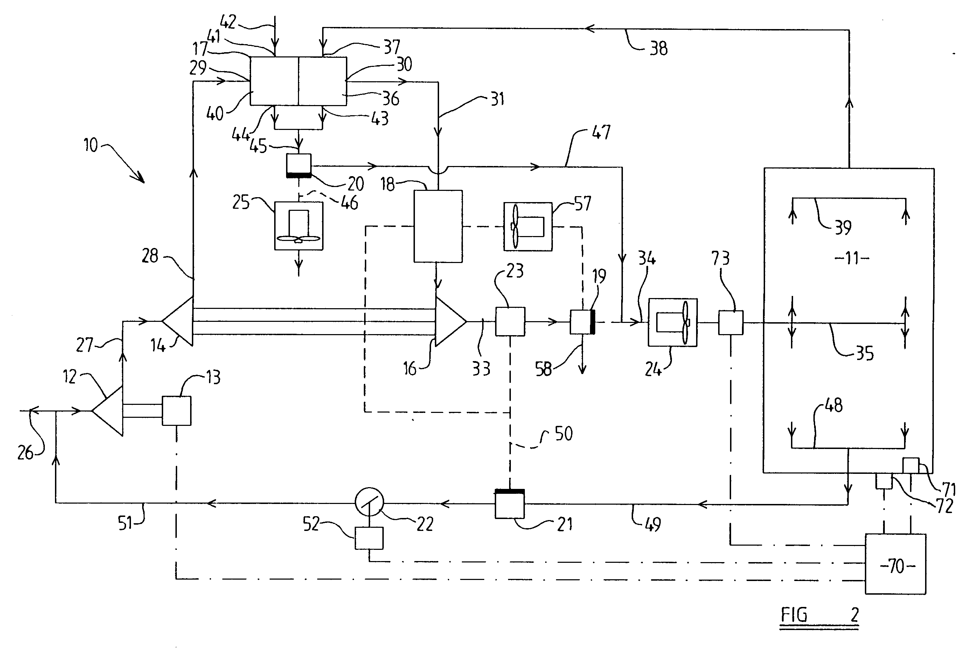

A system 10 in accordance with the present invention operates to deliver a flow of air at a temperature required for conditioning an enclosure which in the exemplary embodiment of Figures 1 and 2 comprises a compartment of a passenger carriage 11 of a railway train (not shown). In this embodiment basic components of the system comprise a first compressor wheel 12 driven by an electric motor 13; a second compressor wheel 14 mounted on a common shaft 15 with an air expansion turbine wheel 16 by which it is driven; a primary heat exchanger 17; a reheater-condenser heat exchanger 18; first, second and third airflow directional control valves 19, 20 and 21, respectively; a volume airflow control valve 22; an air mixing box 23; and first and second motor driven fans 24 and 25, respectively. In operation the system is controlled by an electronic control unit (ECU) 70.

In a cooling mode of operation, as shown in Figure 1, the system 10 delivers a flow of air at a temperature lower than that of the air ambient of the carriage 11. Ambient air is supplied to the motor driven compressor wheel 12 by way of an inlet duct 26 and air at increased pressure and temperature is delivered by the compressor wheel 12 to a duct 27 which connects with the second compressor wheel 14. After being further compressed by the second compressor wheel 14 the air is delivered by a duct 28 to an inlet 29 to first airflow passages (not shown) of primary heat exchanger 17.

In passing through the first airflow passages the air transfers heat to air flowing through second airflow passages (not shown) of the heat exchanger 17, and exits an outlet 30 from the first airflow passages at reduced temperature. This reduced temperature air is carried by a duct 31 to airflow passages (not shown) on one side of the reheater-condenser heat exchanger 18. After passage through the heat exchanger 18 the air is supplied to an inlet 32 to the air expansion turbine wheel 16 by which it is expanded to reduce its pressure and temperature before it is delivered from a turbine wheel outlet 33 to the air mixing box 23 which is further connected, as will hereinafter be described, for receiving a recirculated flow of air from the carriage 11. Low temperature air is supplied from the mixing box 23 to a carriage air supply duct 34 which incorporates the first airflow directional control valve 19 and first motor driven fan 24, in downstream order. At its opposite end supply duct 34 connects with carriage air supply vents 35 through which the low temperature air is fed into the carriage 11 for conditioning purposes.

The second airflow passages of the primary heat exchanger 17 are provided as two discrete sets of passages, of which one set 36 is connected by an inlet 37 with a carriage air vent duct 38 that communicates at its opposite end with a first set of carriage air extraction vents 39. The other set 40 of second airflow passages are connected by an inlet 41 with an ambient air intake duct 42. Outlets 43 and 44 from the sets of passages 36 and 40, respectively, conjoin with a duct 45 which in the cooling mode is connected by the second directional control valve 20 with an ambient vent duct 46 that incorporates the second motor driven fan 25. In the cooling mode the motor driven fan 25 is switched on to generate a flow of ambient air (from duct 42) and carriage air (from duct 38) through the second airflow passages 40, 36 respectively, which air is then dumped to ambient atmosphere by way of the vent duct 46. If desired a vent valve (not shown) may be provided in duct 38 whereby in the cooling mode carriage air extracted through extraction vents 39 may be dumped to atmosphere if it is sensed to be above the temperature of ambient atmospheric air.

A branch duct 47 extends from the second directional control valve 20 to join with the carriage air supply duct 34 at a location between the first directional control valve 19 and the first motor driven fan 24. In the cooling mode the second directional control valve 20 closes communication between duct 45 and duct 47.

A second set of carriage air extraction vents 48 are connected by a second carriage air vent duct 49 with the third airflow directional control valve 21. In the cooling mode the directional control valve 21 communicates the duct 49 with a duct 50 which is connected with the air mixing box 23. The ducts 49 and 50 together with the mixing box 23 and carriage air supply duct 34 combine to form a carriage air recirculation loop which for the comfort of passengers should maintain a substantially constant volume flow of low temperature air to the carriage in replenishment of the total volume flow of air extracted therefrom by way of the first and second sets of extraction vents 39 and 48, respectively. In the cooling mode motor driven fan 24 generates a flow of carriage air through the extraction vents 48 to the recirculation loop.

The third airflow directional control valve 21 also provides communication between duct 49 and a duct 51 which connects with the ambient air inlet duct 21 supplying air to the motor driven compressor wheel. The duct 51 incorporates the volume airflow control valve 22 which has a motor 52 connected for receiving control signals from the ECU 70.

In the cooling mode the first airflow directional control valve 19 also opens communication between the carriage air supply duct 34 and a duct 53 which connects with an inlet 54 to the coolant side of reheater-condenser heat exchanger 18. An outlet 55 from the coolant side of the heat exchanger 18 connects with a duct 56 which is joined with the duct 50. The duct 53 incorporates a motor driven fan 57 which in the cooling mode is switched on to generate a flow of air from the carriage air supply duct 34 to the coolant side of heat exchanger 18. Water condensed from air flowing from the compressor wheel 14 to the turbine wheel 16 through the heat exchanger 18 is collected and sprayed into the inlet 37 and, if desired, inlet 41, of the second set of airflow passages 36, 40 of primary heat exchanger 17 by spray nozzles (not shown).

In this mode the first airflow directional control valve 19 closes communication between the carriage air supply duct 34 and an ambient vent duct 58.

The ECU 70 is connected for receiving temperature signals from a sensor 71 located internally of the carriage, a sensor 72 located externally of the carriage, and a sensor 73 located in the carriage air supply duct 34. The ECU 70 is further connected for outputting control signals to the motor 13 driving the compressor wheel 12 and the volume flow control valve motor 52.

On start-up of the system on a hot day, there will be a high heat load in the carriage 11 to be reduced before it is occupied. Temperature sensors 71, 72, 73 sense the temperatures internally of the carriage 11, externally of the carriage 11 and in duct 34, respectively, and signals representative of these temperatures are input to the ECU 70. In this embodiment the ECU 70 holds a look-up table of desirable carriage air temperatures and low temperature air temperatures for a range of ambient temperatures external of the carriage 11. The ECU 70 reads the look-up table to look up desirable values of carriage air and low temperature air temperatures for the prevailing ambient air temperature. The ECU 70 then computes the difference between the actual and desirable temperatures and processes this data to output a signal for control of the variable speed motor 13 which is driven at or near its maximum speed so as to maximise the pressure drop across the turbine wheel 16 whereby air at a sub-zero temperature which is appropriate to the sizing of system components is delivered to the mixing box 23. At this stage the volume airflow control valve 22 is biased closed.

The motor driven fans 24, 25 and 57 are also switched on at system start-up. The sizing and speed of motor driven fan 25 is such as to generate a predetermined flow of air from the carriage 11 to ambient through the second set 36 of second airflow passages of heat exchanger 17. Similarly, the motor driven fan 24 is sized to generate a predetermined volume flow of air from the carriage 11 to the mixing box 23 through ducts 49 and 50. This recirculation air mixes with cold air in the mixing box 23 and is returned as low temperature air to the carriage 11 by way of the air supply duct 34.

When the heat load in the carriage 11 reduces so that the carriage air and low temperature air temperatures are sensed to be at the required values, the ECU 70 signals the motor 13 to reduce the speed of the compressor wheel 12 so that the required carriage air temperature is maintained and there is a substantially constant volume flow of air to the carriage through the carriage air supply duct 34 to replenish the total volume flow of air extracted through vents 39 and 48.

Should the ambient temperature fall so that for the comfort of passengers the carriage air temperature requires to be increased, the ECU 70 signals the motor 13 to decrease the rotational speed of the compressor wheel 12 thereby reducing the pressure drop across the turbine wheel 16. This results in air at increased temperature being delivered by the turbine wheel with a consequential increase in the temperature of low temperature air delivered to the carriage 11. However, when the rotational speed of the compressor wheel 12 is reduced there is a resultant reduction in the volume flow of air delivered by the turbine wheel 16. The present invention compensates for this reduced volume flow from the turbine wheel 16 by providing for the ECU 70 to signal the motor 52 to move the volume airflow control valve 22 towards opening so that ambient air is induced by motor driven fan 24 to enter the duct 51 and flow to the recirculation loop comprised by ducts 49, 50 and 34 to maintain the volume flow therein substantially constant.

In the heating mode, as shown in Figure 2, the first airflow directional control valve 19 is switched to communicate the mixing box 23 with the vent duct 58 and close communication between the mixing box 23 and ducts 34 and 53. The second airflow directional control valve 20 is switched to communicate the duct 45 from the heat exchanger outlets 43 and 44 with the duct 47 which joins with carriage air supply duct 34 and to close communication between duct 45 and vent duct 46. The third airflow directional control valve 21 is switched so that communication between duct 49 and duct 50 is closed whilst that between duct 49 and duct 51 is maintained open. Switching of the directional control valves 19, 20, 21 may be by any suitable means such as, for example, a pneumatic servo system (not shown), or solenoid control.

With the directional control valves 19, 20, 21 switched to the heating mode the volume airflow control valve 22 is moved by motor 52 to its fully open position, the motor driven fan 24 and the motor 13 driving compressor wheel 12 are switched on, and the motor driven fans 25 and 57 are switched off. A portion of carriage air is extracted through vents 48 and flows by way of ducts 49 and 51 to the compressor wheel 12, any excess air being vented to ambient atmosphere through inlet duct 26. In flowing to the inlet 29 to the first airflow passages of the primary heat exchanger 17 the air is compressed first by compressor wheel 12 and further by compressor wheel 14 so that the temperature of the air is increased. In passage through the first airflow passages the air transfers heat to air flowing in the second airflow passages. After exiting the first airflow passages the air flows through duct 31 to the turbine wheel 16 by which it is expanded before being dumped to ambient atmosphere by way of the mixing box 23 and vent duct 58.

At the same time the motor driven fan 24 generates flows of ambient air and a second portion of carriage air through the second airflow passages of heat exchanger 17 where the temperature of these flows of air is increased by transfer of heat from the air flowing through the first airflow passages. The ambient and carriage airflows exit respective outlets 44 and 43 and mix in duct 45 before flowing as high temperature air to the carriage inlet vents 35 by way of ducts 47 and 34.

On start-up of the system 10 on a cold day the ECU 70 receives signals from sensors 71, 72 and 73 representative of carriage temperature, ambient temperature and carriage supply air duct temperature. The ECU 70 reads the look-up table and reads down values for carriage air and high temperature air temperatures for the prevailing ambient air temperature. The ECU 70 then computes the difference between the actual and desirable temperatures and processes this data to output a signal for control of the motor 13 driven compressor wheel 12 which is driven at or near its maximum speed so as to maximise the increase in pressure and, hence, temperature of the air delivered by way of the second compressor wheel 14 to the first airflow passages of the heat exchanger 17. As the temperature in the carriage 11 builds up towards the desired value the ECU 70 progressively reduces the speed of the motor driven compressor 12 until the temperature stabilises within a desired range. Thereafter the motor driven compressor wheel 12 is run at a speed appropriate to maintaining the temperature within the range unless there is a change in ambient air temperature which demands a change in compressor wheel 12 speed.

One advantage of the present invention is that the same primary heat exchanger supplies the flow of low temperature air for cooling and the flow of high temperature air for heating.

Another advantage of the invention is that the number of airflow directional control valves required to switch between the cooling and heating modes are kept to a minimum.

A further advantage of the invention, as seen in the embodiment hereinbefore described with reference to and as illustrated in the accompanying drawings, is that a flow of ventilating air can be induced through the carriage irrespective of whether the system is switched to the cooling mode or to the heating mode. Thus, with the system switched to the cooling mode and the motor 13 of compressor wheel 12 switched off, the motor driven fan 24 is switched on to draw in air through ambient air inlet 26, which air flows by way of ducts 27, 28, 31 and 34 to the carriage air supply vents 35. At the same time motor driven fan 25 is switched on to extract air from the carriage by way of vents 39 and ducts 38 and 45, which air is dumped to ambient atmosphere through vent duct 46. On the other hand, with the system switched to the heating mode, the motor driven fan 24 is switched on to draw in ambient air through inlet duct 42 which air is mixed with air extracted from the carriage 11 by way of vents 39 and the resulting air mix is delivered to the carriage 11 through supply vents 35. At the same time, the pressure differential between the interior of the carriage 11 and ambient, forces air out of the carriage 11 to ambient by way of extraction vents 48 and ducts 49, 51 and 26.

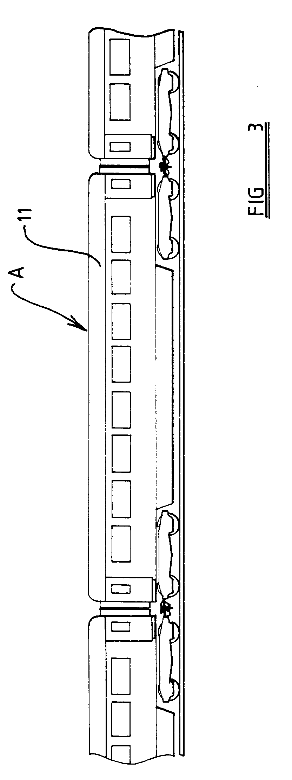

In Figure 3 there is shown a ground based transportation vehicle A being in this example a train, embodying the air cycle conditioning system of the invention.

It is to be appreciated, of course, that the embodiment of the invention hereinbefore described with reference to and as shown in the accompanying drawings is not limiting and modifications and changes are possible.

For instance, the motor 13 driving the compressor wheel 12 could be a constant speed motor which is switched on and off in driving the compressor wheel to maintain temperature internal of the carriage 11 within a desired range. In the cooling mode, as the temperature rises towards the upper end of the range the motor 13 is switched on to the drive the compressor wheel 12 so that the system delivers low temperature air to the carriage 11. When the temperature in the carriage 11 has been reduced to the lower end of the range the motor 13 is switched off. In the heating mode the motor 13 is switched on at the bottom end of the required temperature range and off at the upper end of the range.

Also, the reheater-condenser heat exchanger 18 could be located between the mixing box 23 and carriage air supply duct 34 so that all of the airflow from the mixing box 23 to the carriage 11 is by way of the coolant side of the heat exchanger 18.

## Claims

1. An air cycle air conditioning system (10) which in one mode of operation delivers a flow of low temperature air for cooling an enclosure (11) and in another mode of operation delivers a flow of high temperature air for heating the enclosure (11), the system comprising primary heat exchange means (17) having first air flow passages disposed in heat exchange relationship with second air flow passages (36, 40), air compressor means (12, 14) connected for supplying air to the first airflow passages, air expansion means (16) connected for receiving air from the first airflow passages, inlet duct means (38, 42) connected for supplying air to the second airflow passages (36, 40), outlet duct means (45) connected for receiving air from the second airflow passages (36, 40), characterised in that first airflow directional control valve means (19) are connected with an outlet (33) from the expansion means (16) and second airflow directional control valve means (20) are connected with the outlet duct means (45), the first valve means (19) being movable between a position in which the expansion means outlet (16) is communicated with the enclosure (11) in the cooling mode and a position in which the expansion means outlet (16) is communicated with ambient atmosphere in the heating mode, and the second valve means (20) being movable between a position in which the outlet duct means (45) is communicated with ambient atmosphere in the cooling mode and a position in which the outlet duct means (45) is communicated with the enclosure (11) in the heating mode.

2. A system according to claim 1 characterised in that the system (10) includes an enclosure air recirculation loop (49, 50, 34) incorporating a third airflow directional control valve (21) movable between a position in which a portion of enclosure air is mixed with expanded air and delivered back to the enclosure (11) in the cooling mode, and a position in which the portion of enclosure air is supplied to an inlet of the air compressor means (12, 14) in the heating mode.

3. A system according to claim 2 characterised in that duct means (51) connecting between the third airflow control valve and the inlet to the air compressor means (12, 14), incorporates a volume airflow control valve (22) whereby in the cooling mode a controlled flow of ambient air may be introduced into the enclosure air recirculation loop (49, 50, 34) to maintain a constant volume flow of cooling air to the enclosure 11.

4. A system according to any one of claims 1 to 3 characterised in that the inlet duct means (38, 42) supplying air to the second airflow passages (36, 40) comprises an ambient air inlet duct (42), and an enclosure air recirculation duct (38) whereby a portion of enclosure air may be recirculated to the second airflow passages (36).

5. A system according to claim 4 characterised in that second airflow passages (40), for ambient air are separated from second airflow passages (38) for recirculated enclosure air and the ambient air and recirculated enclosure airflows are mixed downstream of the second airflow passages (38, 40).

6. A system according to claim 5 characterised in that the primary heat exchange means comprises a unitary heat exchanger.

7. A system according to any one of claims 1 to 6 characterised in that a first motor driven fan (25) is provided in an ambient vent duct (46) forming part of the duct means (45) from the second airflow passages, (36, 40) one or both of the motors (24, 25) being operable when switched on, to provide a flow of ventilating air through the enclosure (11) when the air compressor means (12, 14) is non-operational and the first and second directional airflow control valves (19, 20) are switched either to the heating mode or to the cooling mode.

8. A system according to any one of the preceding claims characterised in that the air compressor means (12, 14) comprises a compressor wheel (12, 14) driven by an electric motor.

9. A system according to claim 8 characterised in that the air compressor means (12, 14) comprises a first motor driven compressor wheel (12) connected for delivering air to a second compressor wheel (14) mounted for rotation on a common shaft with a turbine of the air expansion means (16).

10. A system according to any one of claims 7 to 9 characterised in that the motor (13) is a variable speed motor connected for receiving control signals from an electronic control unit (70) to vary the rotational speed of the motor (13).

11. A system according to claim 7 or claim 8 characterised in that the electric motor is a constant speed motor (13) which is switched on and off by an electronic control unit (70).

12. A system according to anyone of claims 1 to 11 characterised in that a reheater-condenser heat exchanger (18) is connected on one side for receiving air flowing from the first airflow passages of the primary heat exchange means (17) and for delivering this air to the air expansion turbine means (16), and is connected on its other side for receiving at least a portion of the air flowing to the enclosure (11) from the air expansion turbine means (16).

13. A system according to any one of claims 1 to 12 characterised in that the air expansion turbine means (16), delivers air to a mixing box (23) for mixing, in the cooling mode, with recirculated enclosure air.

14. A system according to claim 13 characterised in that the mixing box (23) delivers air to enclosure air supply duct means (34) which incorporates the first airflow control valve means (19) and which is joined downstream of the first airflow control valve means (19) with a high temperature air supply duct (47) connecting at its opposite end with the second air flow directional control valve means (20).

15. A ground based transportation vehicle (A) having an air cycle conditioning system (10) in accordance with any one of the preceding claims.
